(19)

Europäisches Patentamt
European Patent Office
Office européen des brevets

(11) **EP 4 292 777 A1**

(12) **EUROPEAN PATENT APPLICATION**
published in accordance with Art. 153(4) EPC

(43) Date of publication:
**20.12.2023 Bulletin 2023/51**

(21) Application number: **21925720.1**

(22) Date of filing: **10.03.2021**

(51) International Patent Classification (IPC):
**B25J 13/08** (2006.01)

(52) Cooperative Patent Classification (CPC):
**B25J 13/08; G06T 7/521; G06T 7/70**

(86) International application number:
**PCT/JP2021/009562**

(87) International publication number:
**WO 2022/172471 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2021 JP 2021020864**

(71) Applicant: **OMRON Corporation**
**Kyoto 600-8530 (JP)**

(72) Inventor: **NAKAI, Arata**
**Kyoto-shi, Kyoto 600-8530 (JP)**

(74) Representative: **Mewburn Ellis LLP**
**Aurora Building**
**Counterslip**
**Bristol BS1 6BX (GB)**

(54) **ASSISTANCE SYSTEM, IMAGE PROCESSING DEVICE, ASSISTANCE METHOD AND PROGRAM**

(57)     An assistance system includes: an imaging device configured to perform image capturing of an object; a setting unit configured to set a movement range of the imaging device; a robot configured to sequentially move the imaging device to a plurality of measurement positions within the movement range; a measurement unit configured to measure, for each of the plurality of measurement positions, position and orientation of the object by using a captured image obtained by the image capturing by the imaging device; an evaluation unit configured to evaluate a measurement result by the measurement unit; and a presentation unit configured to present a map representing a correspondence relationship between each of the plurality of measurement positions and an evaluation result by the evaluation unit. Such an assistance system can assist condition setting when measuring the position and orientation of the object in consideration of a possible orientation of the object.

FIG.1

EP 4 292 777 A1

**Description**

TECHNICAL FIELD

The present disclosure relates to an assistance system, an image processing device, an assistance method, and a program.

BACKGROUND ART

Conventionally, there is known a technique in which, from a plurality of objects (hereinafter, also referred to as "workpieces") stacked in bulk, a robot picks a workpiece one by one. In such a technique, position and orientation of a workpiece is measured, and a motion of the robot is determined depending on a measurement result.

For example, Japanese Patent Laying-Open No. 2019-155535 (PTL 1) discloses a workpiece picking device including: a sensor that measures position and orientation of a workpiece; a hand that grips the workpiece; a robot that moves the hand to a gripping position and moves the hand from the gripping position; and a control device. The control device determines situations of workpieces on the basis of measurement results of the positions and orientations of the workpieces and a calculation result of the number of the workpieces whose positions and orientations are detected, and changes measurement parameters when the determination result satisfies a predetermined condition.

CITATION LIST

PATENT LITERATURE

PTL 1: Japanese Patent Laying-Open No. 2019-155535

SUMMARY OF INVENTION

TECHNICAL PROBLEM

The technique described in PTL 1 sets measurement parameters so as to improve a success rate of gripping when the picking device is operated. That is, the technique described in PTL 1 does not consider to assist condition setting when measuring the position and orientation of a workpiece, at the time of starting the picking device.

Workpieces stacked in bulk can take various orientations when viewed from a sensor. Therefore, in order to appropriately set the conditions when measuring the positions and orientations of the workpieces at the time of starting the picking device, a user needs to check measurement results of the positions and orientations of the workpiece while manually changing the orientation of the workpiece appropriately. As a result, it takes time and effort to perform condition setting when measuring the positions and orientations of the workpieces. Therefore, it is desired to develop a system that assists condition setting in consideration of a possible orientation of the obj ect.

The present disclosure has been made in view of the above problems, and an object of the present disclosure is to provide an assistance system, an image processing device, an assistance method, and a program that are capable of assisting condition setting, when measuring position and orientation of an object, in consideration of a possible orientation of the object.

SOLUTION TO PROBLEM

According to an example of the present disclosure, an assistance system includes an imaging device, a setting unit, a robot, a measurement unit, an evaluation unit, and a presentation unit. The imaging device performs image capturing of an object. The setting unit sets a movement range of the imaging device. The robot sequentially moves the imaging device to a plurality of measurement positions within the movement range. The measurement unit measures, for each of the plurality of measurement positions, position and orientation of the object by using a captured image obtained by image capturing by the imaging device. The evaluation unit evaluates a measurement result by the measurement unit. The presentation unit presents a map representing a correspondence relationship between each of the plurality of measurement positions and an evaluation result by the evaluation unit.

In the present disclosure, the orientations of the object are different from each other among the captured images obtained by image capturing from the plurality of measurement positions. Therefore, by checking the map, the user can easily grasp the correspondence relationship between the positions and orientations of the object appearing in the captured images and the evaluation results of the measured positions and orientations of the object. On the basis of the correspondence relationship, the user can determine whether the evaluation result for each measurement position is good or bad and can appropriately set a condition when measuring the position and orientation of the object, by using an image in which the object appears. As described above, the assistance system can assist condition setting when measuring the position and orientation of the object in consideration of possible orientations of the object.

In the above disclosure, the evaluation unit calculates at least one evaluation value representing the evaluation result. The presentation unit receives, on the map, designation of one measurement position of the plurality of measurement positions, and, in response to the designation of the one measurement position, the presentation unit presents the at least one evaluation value corresponding to the one measurement position.

With the above disclosure, the user can easily check the evaluation value, which is a detail of the evaluation result, for each measurement position. The user can appropriately adjust the condition when measuring the position and orientation of the object depending on a magnitude of the evaluation value.

In the above disclosure, the measurement unit generates three-dimensional point cloud data of a visual field area of the imaging device, based on the captured image corresponding to each of the plurality of measurement positions. The presentation unit receives, on the map, designation of one measurement position of the plurality of measurement positions, and, in response to the designation of the one measurement position, the presentation unit presents an image generated from the three-dimensional point cloud data corresponding to the one measurement position.

With the above disclosure, the user can easily check, for each measurement position, whether there is a lack of points or an erroneously detected point in the three-dimensional point cloud data generated from the captured image.

In the above disclosure, the setting unit sets a reference position within the movement range and registers position and orientation of a model of the object such that the position and orientation of the model coincides with the position and orientation of the object measured from the captured image corresponding to the reference position. In response to the designation of the one measurement position, the presentation unit generates a virtual image of the model when viewed from the one measurement position, and presents the virtual image.

With the above disclosure, by comparing the image generated from the three-dimensional point cloud data with the virtual image, the user can easily check whether the three-dimensional point cloud data is appropriately generated.

In the above disclosure, the measurement unit generates three-dimensional point cloud data of a visual field area of the imaging device, based on the captured image, and measures the position and orientation, based on the three-dimensional point cloud data and template data. The at least one evaluation value includes a correlation value between the three-dimensional point cloud data and the template data.

According to the above disclosure, by checking the correlation value, the user can determine whether there is a problem in searching for the object using the template data. When the correlation value is low, the user can take countermeasures (for example, adjustment of an intensity of illumination light, a shutter speed, a camera gain, and the like.) to increase the correlation value.

In the above disclosure, the measurement unit performs a plurality of times of measurement for each of the plurality of measurement positions. The at least one evaluation value includes a value representing a repetition accuracy of the plurality of times of measurement.

With the above disclosure, by checking the value representing the repetition accuracy, the user can check stability of the measurement. When the repetition accuracy is low, the user can take countermeasures (for example, adjustment of an intensity of illumination light, a shutter speed, a camera gain, and the like.) to improve the repetition accuracy.

In the above disclosure, the plurality of measurement positions include a reference position. The measurement unit measures the position and orientation of the object in a camera coordinate system taking the imaging device as a reference. The at least one evaluation value includes, for each of the plurality of measurement positions, a value representing a difference between a first change amount, of the position and orientation of the object in the camera coordinate system, estimated based on a movement amount of the measurement position from the reference position and a second change amount from the position and orientation measured at the reference position to the position and orientation measured at the measurement position.

With the above disclosure, by checking the value representing the difference between the first change amount and the second change amount, the user can check whether there is a problem occurring in a process of searching for the object from the captured image. When such a problem is occurring, the user may change a condition related to the process of searching for the target object from the captured image.

In the above disclosure, the plurality of measurement positions are on the same spherical surface. The map is represented in a polar coordinate system with a center of the sphere as an origin.

With the above disclosure, by checking the map, the user can easily grasp each of the plurality of measurement positions disposed on the spherical surface.

According to an example of the present disclosure, an image processing device includes: a setting unit configured to set a movement range of an imaging device configured to perform image capturing of an object; a measurement unit configured to measure, for each of a plurality of measurement positions within the movement range, position and orientation of the object by using a captured image obtained from the imaging device located at each of the plurality of measurement positions; and an evaluation unit configured to evaluate a measurement result by the measurement unit; and a presentation unit configured to present a map representing a correspondence relationship between each of the plurality of measurement positions and an evaluation result by the evaluation unit.

According to an example of the present disclosure, an assistance method includes first to fifth steps. The first step is a step of setting a movement range of an imaging device configured to perform image capturing of an object. The second step is a step of sequentially moving the imaging device to a plurality of measurement positions within the movement range by using a robot. The third step is a step of measuring, for each of the plurality of measurement positions, position and orientation of the object by using a captured image obtained by image capturing by the imaging device. The fourth step is a step of evaluating a measurement result of the positions and orientations. The fifth step is a step of presenting a map representing a correspondence relationship between each of the plurality of measurement positions and an evaluation result.

According to an example of the present disclosure, a program causes a computer to perform the above assistance method. With the above disclosures, it is possible to assist condition setting when measuring the position and orientation of the object in consideration of a possible orientation of the object.

ADVANTAGEOUS EFFECTS OF INVENTION

The present disclosure makes it possible to support condition setting when measuring position and orientation of an object in consideration of a possible orientation of the object.

BRIEF DESCRIPTION OF DRAWINGS

Fig. 1 is a schematic diagram illustrating an overall configuration of an assistance system according to an embodiment.
Fig. 2 is a diagram illustrating an example of workpieces stacked in bulk.
Fig. 3 is a schematic diagram illustrating an example of a hardware configuration of an image sensor controller illustrated in Fig. 1.
Fig. 4 is a diagram illustrating an example of coordinate systems used in the assistance system.
Fig. 5 is a block diagram illustrating an example of a functional configuration of the image sensor controller illustrated in Fig. 1.
Fig. 6 is a flowchart illustrating a flow of an assistance process in the assistance system.
Fig. 7 is a diagram illustrating an example of a screen (setting screen) that assists setting of a movement range.
Fig. 8 is a diagram illustrating an example of a performance report screen.

DESCRIPTION OF EMBODIMENTS

Hereinafter, an embodiment of the present invention will be described in detail with reference to the drawings. In the drawings, the same or corresponding portions and units are denoted by the same reference signs, and the description thereof will not be repeated.

§1 Application Example

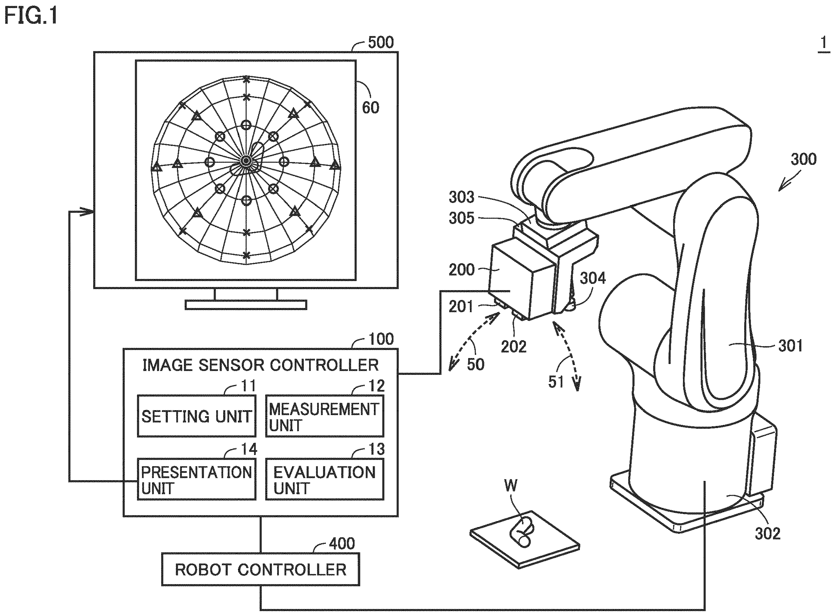

With reference to Fig. 1, an example of a scene in which the present invention is applied will be described. Fig. 1 is a schematic diagram illustrating an overall configuration of an assistance system according to an embodiment. Assistance system 1 illustrated in Fig. 1 assists condition setting when measuring position and orientation of a workpiece W using an image in which workpiece W as an object appears. Assistance system 1 is incorporated in, for example, a production line or the like, and is used to control picking with respect to the workpieces W stacked in bulk.

Assistance system 1 illustrated in Fig. 1 includes an image sensor controller 100, a measurement head 200, a robot 300, a robot controller 400, and a display 500.

Measurement head 200 performs image capturing of a subject including workpiece W. Measurement head 200 includes a projection unit 201 and an imaging unit 202. Projection unit 201 projects arbitrary projection pattern light onto the subject in accordance with an instruction from image sensor controller 100. The projection pattern is, for example, a pattern in which brightness changes periodically along a predetermined direction in an irradiation plane. Imaging unit 202 performs, in accordance with an instruction from image sensor controller 100, image capturing of the subject on which the projection pattern light is projected.

Projection unit 201 includes, as main components, for example: a light source such as a light emitting diode (LED) or a halogen lamp; and a filter disposed on an irradiation plane side of projection unit 201. The filter generates projection pattern light necessary for measurement of a three-dimensional shape as will be described later, and can arbitrarily change in-plane light transmittance in accordance with a command from image sensor controller 100. Projection unit 201 may project fixed projection pattern light that does not change with time, or may project projection pattern light that changes with time. Projection unit 201 may have a configuration using a liquid crystal or a digital mirror device (DMD) and a light source (such as an LED or a laser light source).

Imaging unit 202 includes, as main components, for example: an optical system such as a lens; and an imaging element such as a coupled charged device (CCD) or a complementary metal oxide semiconductor (CMOS) sensor.

Robot 300 moves measurement head 200. Robot 300 may further perform picking with respect to workpiece W. That is, assistance system 1 may assist condition setting when measuring position and orientation of workpiece W using a robot that picks workpieces W stacked in bulk. However, assistance system 1 may assist condition setting when measuring the position and orientation of workpiece W using a robot different from the robot that picks the workpieces W stacked in bulk.

Robot 300 includes an articulated arm 301 and a base 302 that supports articulated arm 301. A flange plate 303 is attached to a top end of articulated arm 301. A support member 305 that supports measurement head 200 and an end effector 304 is attached to flange plate 303. Operation of robot 300 is controlled by robot controller 400. End effector 304 is configured to hold workpiece W, and includes, for example, a suction pad, a two-finger hand, or the like.

Robot controller 400 controls articulated arm 301 in accordance with a movement command from image sensor controller 100. The movement command indicates, for example, position and orientation of flange plate 303. Robot controller 400 controls articulated arm 301 such that the position and orientation of flange plate 303 coincide with the movement command.

Image sensor controller 100 provides a screen for helping condition setting when measuring the position and orientation of workpiece W. As illustrated in Fig. 1, image sensor controller 100 includes a setting unit 11, a measurement unit 12, an evaluation unit 13, and a presentation unit 14.

Setting unit 11 sets a movement range of measurement head 200. Setting unit 11 may set the movement range in accordance with a user input. Setting unit 11 generates a movement command to sequentially move measurement head 200 to a plurality of measurement positions within the movement range, and outputs the generated movement command to robot controller 400. As a result, robot 300 sequentially moves measurement head 200 to the plurality of measurement positions within the movement range. For example, measurement head 200 moves along arrows 50 and 51.

Measurement unit 12 measures, for each of the plurality of measurement positions, the position and orientation of workpiece W by using a captured image obtained by image capturing by measurement head 200. Specifically, measurement unit 12 measures a three-dimensional shape in a visual field area of measurement head 200 on the basis of the captured image, and searches for a shape corresponding to workpiece W in the measured three-dimensional shape. Measurement unit 12 measures the position and orientation of workpiece W depending on a search result.

Evaluation unit 13 evaluates, for each of the plurality of measurement positions, a measurement result of the position and orientation of workpiece W by measurement unit 12.

Presentation unit 14 presents a map 60 representing a correspondence relationship between each of the plurality of measurement positions and an evaluation result by evaluation unit 13.

In the captured images obtained by image capturing from the plurality of measurement positions, the orientation of workpiece W is different among the captured images. Therefore, by checking map 60, the user can easily grasp the correspondence relationship between the positions and orientations of workpieces W appearing in the captured images and the evaluation results of the measured positions and orientations of workpieces W. On the basis of the correspondence relationship, the user can determine whether the evaluation result for each measurement position is good or bad and can appropriately set a condition when measuring the position and orientation of workpiece W. As described above, assistance system 1 can assist condition setting when measuring the position and orientation of workpiece W in consideration of a possible orientation of workpiece W.

§2 Specific Examples

<A. Example of workpieces stacked in bulk>

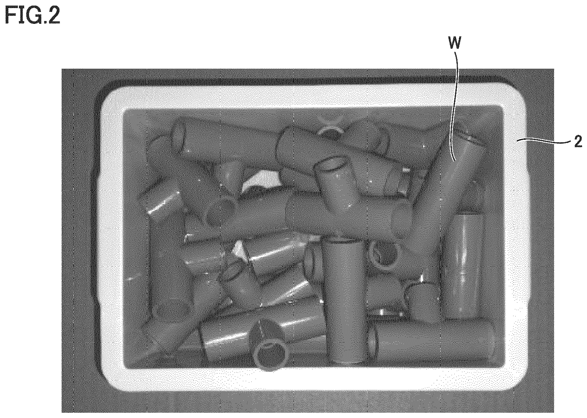

Fig. 2 is a diagram illustrating an example of workpieces stacked in bulk. Fig. 2 illustrates a plurality of workpieces W stacked in bulk in a container 2. The plurality of workpieces W stacked in bulk in container 2 are sequentially picked one by one.

When there is workpiece W whose position and orientation is not accurately measured, such workpiece W is not picked and remains in container 2. The number of workpieces W that are not picked and remain in container 2 is preferably 0. Therefore, it is preferable to set conditions so that it is possible to accurately measure each of workpieces W in various possible orientations in container 2. However, it is time-consuming to find an optimum condition for accurately measuring each of workpieces W in various possible orientations in container 2. Therefore, the user needs to perform condition setting when measuring the position and orientation of workpiece W in consideration of possible orientation of workpiece W such that both the time required for condition setting and the number of workpieces W that are not picked and remain in container 2 fall within allowable ranges. Assistance system 1 according to the present embodiment assists such condition setting.

<B. Hardware configuration example of image sensor controller>

Image sensor controller 100 is typically a computer having a general-purpose architecture, and executes an assistance process according to the present embodiment by executing a previously installed program (instruction code). Such a program is typically distributed in a state of being stored in various recording media or the like, or is installed in image sensor controller 100 via a network or the like.

When such a general-purpose computer is used, an operating system (OS) for executing basic processes of the computer may be installed in addition to an application for performing the assistance process according to the present embodiment. In this case, the program according to the present embodiment may call necessary modules from program modules provided as part of the OS, in a predetermined sequence at predetermined timings to perform the process. That is, the program according to the present embodiment itself does not include the above modules, and the process may be performed in cooperation with the OS. The program according to the present embodiment may be in such a form that does not includes some modules as described above.

Furthermore, the program according to the present embodiment may be provided while being incorporated in part of another program. Also in that case, the program itself does not include the modules included in another program that is to be combined as described above, and the process is performed in cooperation with the another program. That is, the program according to the present embodiment may be in a form of being incorporated in such another program. However, some or all of functions provided by execution of a program may be implemented as a dedicated hardware circuit.

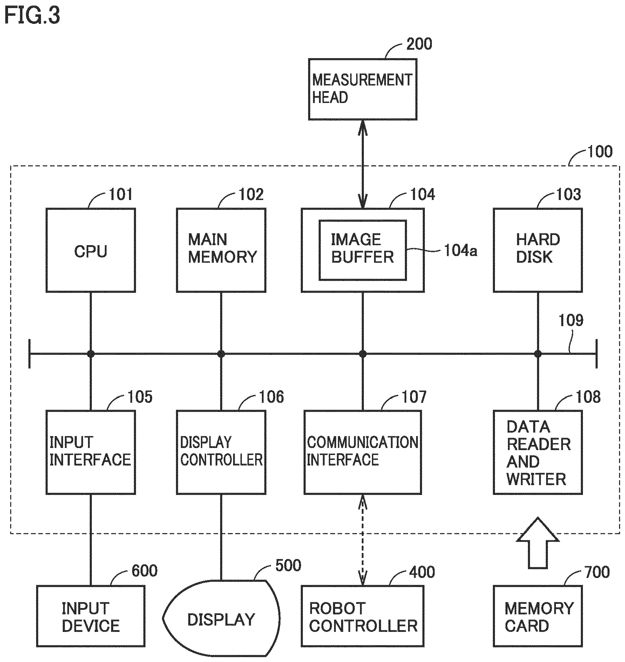

Fig. 3 is a schematic diagram illustrating an example of a hardware configuration of an image sensor controller illustrated in Fig. 1. As illustrated in Fig. 3, image sensor controller 100 includes: a central processing unit (CPU) 101, which is an arithmetic processing unit; a main memory 102 and a hard disk 103 that function as storage units; a measurement head interface 104; an input interface 105; a display controller 106; a communication interface 107; and a data reader and writer 108. These units are data-communicably connected to each other via a bus 109.

CPU 101 develops a program (code) installed in hard disk 103 in main memory 102 and executes the program in a predetermined order to perform various operations. Main memory 102 is typically a volatile storage device such as a dynamic random access memory (DRAM), and holds an image acquired by measurement head 200 in addition to a program read out from hard disk 103. Furthermore, hard disk 103 stores various data and the like as will be described later. Note that a semiconductor storage device such as a flash memory may be adopted in addition to hard disk 103 or instead of hard disk 103.

Measurement head interface 104 mediates data transmission between CPU 101 and measurement head 200. That is, measurement head interface 104 is connected to measurement head 200. Measurement head interface 104 provides a projection command and an image capturing command to measurement head 200 in accordance with an internal command generated by CPU 101. Measurement head interface 104 includes an image buffer 104a for temporarily accumulating images from measurement head 200. When images of a predetermined number of frames are accumulated in image buffer 104a, measurement head interface 104 transfers the accumulated images to main memory 102.

Input interface 105 mediates data transmission between CPU 101 and an input device 600. That is, input interface 105 receives input information that is input by the user to input device 600. Input device 600 includes a keyboard, a mouse, a touch panel, and the like.

Display controller 106 is connected to display 500 and controls a screen of display 500 so as to notify the user of a processing result of CPU 101 and the like.

Communication interface 107 mediates data transmission between CPU 101 and an external device such as robot controller 400. Communication interface 107 typically includes Ethernet (registered trademark), a universal serial bus (USB), or the like.

Data reader and writer 108 mediates data transmission between CPU 101 and a memory card 700 as a recording medium. That is, a program to be executed by image sensor controller 100 and the like are distributed while being stored in memory card 700, and data reader and writer 108 reads the program from memory card 700. In response to an internal command from CPU 101, data reader and writer 108 writes the image captured by measurement head 200 and/or a processing result by image sensor controller 100 into memory card 700. Note that memory card 700 includes a general-purpose semiconductor storage device such as a secure digital (SD), a magnetic storage medium such as a flexible disk, an optical storage medium such as a compact disk read only memory (CD-ROM), or the like.

<C. Coordinate system>

CPU 101 calculates the positions and orientations of workpiece W, measurement head 200, and robot 300 by using coordinate values of a plurality of coordinate systems.

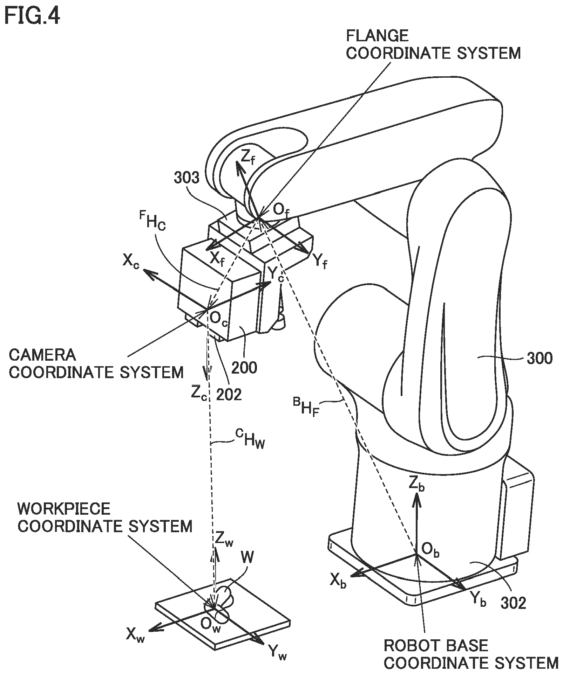

Fig. 4 is a diagram illustrating an example of the coordinate systems used in the assistance system. As illustrated in Fig. 4, assistance system 1 uses a robot base coordinate system, a flange coordinate system (also referred to as tool coordinate system), a camera coordinate system, and a workpiece coordinate system.

The robot base coordinate system is a coordinate system based on base 302 of robot 300. The robot base coordinate system is defined by an origin Ob set on base 302 and by basis vectors Xb, Yb, and Zb.

The flange coordinate system is a coordinate system based on flange plate 303 of robot 300. The flange coordinate system is defined by an origin Of set on the flange surface of flange plate 303 and by basis vectors Xf, Yf, and Zf.

The camera coordinate system is a coordinate system based on imaging unit 202 of measurement head 200. The camera coordinate system is defined by an origin Oc set on imaging unit 202 and by basis vectors Xc, Yc, and Zc.

The workpiece coordinate system is a coordinate system based on workpiece W. The workpiece coordinate system is defined by an origin Ow set on workpiece W and by basis vectors Xw, Yw, and Zw.

The position and orientation of workpiece W detected on the basis of the captured image received from measurement head 200 is represented by, for example, a coordinate transformation matrix $^{C}H_{W}$ that transforms the camera coordinate system into the workpiece coordinate system. The coordinate transformation matrix

$^{C}H_{W}$ represents a position of the origin Ow and the basis vectors Xw, Yw, and Zw of the workpiece coordinate system in the camera coordinate system.

Measurement head 200 is fixed to flange plate 303 with support member 305 interposed therebetween. Therefore, a relative positional relationship between measurement head 200 and flange plate 303 is constant. The relative positional relationship is represented by, for example, a coordinate transformation matrix $^{F}H_{C}$ that transforms the flange coordinate system into the camera coordinate system. The coordinate transformation matrix $^{F}H_{C}$ represents a position of the origin Oc and the basis vectors Xc, Yc, and Zc of the camera coordinate system in the flange coordinate system. The coordinate transformation matrix $^{F}H_{C}$ is represented by fixed values and is obtained by calibration performed in advance. As the calibration, for example, known hand-eye calibration can be adopted in which imaging unit 202 of measurement head 200 performs image capturing of a marker installed at a fixed position while robot 300 is made to operate.

The movement command that is output from image sensor controller 100 to robot controller 400 is represented by, for example, a coordinate transformation matrix $^{B}H_{F}$ that transforms the base coordinate system into the flange coordinate system. The coordinate transformation matrix $^{B}H_{F}$ represents the origin Of and the basis vectors Xf, Yf, and Zf of the flange coordinate system in the base coordinate system.

Position and orientation of measurement head 200 in the robot base coordinate system is represented by, for example, the coordinate transformation matrix $^{B}H_{C}$ that transforms the robot base coordinate system into the camera coordinate system. The coordinate transformation matrix $^{B}H_{C}$ satisfies

$^{B}H_{C} = {}^{B}H_{F} \cdot {}^{F}H_{C}$. As described above, the coordinate transformation matrix $^{F}H_{C}$ is therefore represented by fixed values. Therefore, CPU 101 can calculate the movement command to be output to robot controller 400, from the position and orientation of measurement head 200 at a movement destination.

The position and orientation of workpiece W in the robot base coordinate system is represented by, for example, a coordinate transformation matrix $^{B}H_{W}$ that transforms the robot base coordinate system into the workpiece coordinate system.

The coordinate transformation matrix $^{B}H_{W}$ satisfies

$^{B}H_{W} = {}^{B}H_{F} \cdot {}^{F}H_{C} \cdot {}^{C}H_{W}$. As described above, the coordinate transformation matrix $^{C}H_{W}$ represents the position and orientation of workpiece W in the camera coordinate system, and is detected on the basis of the captured image received from measurement head 200. Therefore, CPU 101 can calculate the position and orientation of workpiece W in the robot base coordinate system by using the movement command output to robot controller 400 and the measurement result based on the captured image.

<D. Functional configuration example of image sensor controller>

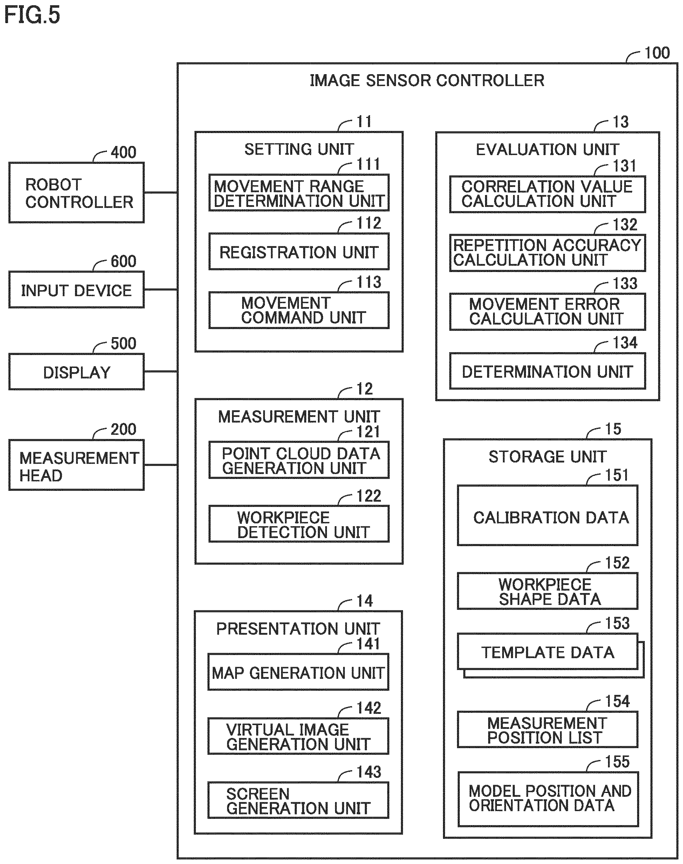

Fig. 5 is a block diagram illustrating an example of a functional configuration of the image sensor controller illustrated in Fig. 1. As illustrated in Fig. 5, image sensor controller 100 includes setting unit 11, measurement unit 12, evaluation unit 13, presentation unit 14, and a storage unit 15. Setting unit 11, measurement unit 12, evaluation unit 13, and presentation unit 14 are implemented by CPU 101 illustrated in Fig. 3 executing a program stored in hard disk 103. Storage unit 15 is realized by main memory 102 and hard disk 103 illustrated in Fig. 3.

(D-1. Storage unit)

Storage unit 15 stores calibration data 151, workpiece shape data 152, a plurality of pieces of template data 153, a measurement position list 154, and model position and orientation data 155.

Calibration data 151 is data defining the relative positional relationship between measurement head 200 and flange plate 303. Calibration data 151 is generated by, for example, hand-eye calibration and represents the coordinate transformation matrix $^{F}H_{C}$.

Workpiece shape data 152 represents a three-dimensional shape of workpiece W. Workpiece shape data 152 is, for example, computer-aided design (CAD) data.

The plurality of pieces of template data 153 are previously created on the basis of workpiece shape data 152. The plurality of pieces of template data 153 represent, in a virtual space, coordinates of points on a surface of a workpiece model when the workpiece model represented by workpiece shape data 152 is viewed from each of a plurality of virtual viewpoints.

Measurement position list 154 represents a list of measurement positions of measurement head 200. Measurement position list 154 is generated by setting unit 11 as will be described later.

Model position and orientation data 155 represents position and orientation of the workpiece model in the robot base coordinate system. Model position and orientation data 155 is generated by setting unit 11 as will be described later.

(D-2. Setting unit)

Setting unit 11 includes a movement range determination unit 111, a registration unit 112, and a movement command unit 113.

Movement range determination unit 111 sets the movement range of measurement head 200 depending on an input to input device 600 and the captured image received from measurement head 200 located at a designated position and being in a designated orientation. The movement range of measurement head 200 represents, for example, an area on a spherical surface that is centered on a reference point set in the visual field area of measurement head 200 and has a radius equal to a distance between the reference point and imaging unit 202 of measurement head 200. The reference point is, for example, a point that is a center of the visual field area of measurement head 200 and has the same altitude (Z coordinate value) as a center of gravity of workpiece W.

Movement range determination unit 111 sets respective ones of a plurality of positions within the movement range as measurement positions. Movement range determination unit 111 sets the designated position as a reference position. The reference position is included in the plurality of measurement positions.

Registration unit 112 registers information related to the movement range determined by movement range determination unit 111 in storage unit 15. Registration unit 112 generates measurement position list 154 and model position and orientation data 155 as the information related to the movement range.

With respect to the plurality of measurement positions determined by movement range determination unit 111, registration unit 112 generates measurement position list 154 representing a list of each measurement position and the orientation of measurement head 200 at the each measurement position. The orientation of measurement head 200 at each measurement position is set such that the reference point is located on an optical axis of imaging unit 202. In other words, the orientation of measurement head 200 at each measurement position is set such that the orientation of measurement head 200 when viewed from the reference point is constant. That is, in the camera coordinate system, the reference point is a fixed position (for example, a center position of the visual field). For example, when workpiece W is located at the reference point, workpiece W appears at a center in the captured image at each measurement position. When workpiece W is located at a position away from the reference point, workpiece W appears at a position away from the center in the captured image at each measurement position. The position and orientation of measurement head 200 at each measurement position is represented by, for example, the coordinate transformation matrix $^{B}H_{C}$ that transforms the robot base coordinate system into the camera coordinate system corresponding to measurement head 200 at such position and orientation.

Measurement position list 154 includes numbers to identify respective ones of measurement positions in order to distinguish between the plurality of measurement positions. In measurement position list 154, number "0" corresponds to the reference position.

Registration unit 112 determines, as the position and orientation of the workpiece model, the position and orientation of workpiece W measured using the captured image received from measurement head 200 located at the designated position and being in the designated orientation. The workpiece model is a model having the same shape as workpiece W. Registration unit 112 generates model position and orientation data 155 indicating the determined position and orientation of the workpiece model, and registers model position and orientation data 155 in storage unit 15. Model position and orientation data 155 represents position and orientation of the workpiece model in the robot base coordinate system.

Movement command unit 113 generates, in response to an input of an instruction of start to input device 600, a movement command for sequentially moving measurement head 200 to the plurality of measurement positions, and outputs the generated movement command to robot controller 400.

As described above, robot controller 400 receives the movement command indicating the position and orientation of flange plate 303, and controls articulated arm 301 such that the position and orientation of flange plate 303 coincides with the movement command. Therefore, movement command unit 113 reads, from measurement position list 154, the coordinate transformation matrix $^{B}H_{C}$ indicating the position and orientation of measurement head 200 corresponding to each measurement position. The coordinate transformation matrix $^{B}H_{C}$, the coordinate transformation matrix $^{F}H_{C}$ that transforms the flange coordinate system into the camera coordinate system, and the coordinate transformation matrix $^{B}H_{F}$ that transforms the robot base coordinate system into the flange coordinate system satisfy the following equation.

$$^{B}H_{C} = {}^{B}H_{F} \cdot {}^{F}H_{C}$$

Therefore, movement command unit 113 calculates the coordinate transformation matrix $^{B}H_{F}$ by using the read out coordinate transformation matrix $^{B}H_{C}$ and the coordinate transformation matrix $^{F}H_{C}$ represented by calibration data 151. Movement command unit 113 may generate a movement command representing the coordinate transformation matrix $^{B}H_{F}$ obtained by the calculation.

(D-3. Measurement unit)

Measurement unit 12 measures the position and orientation of workpiece W by performing three-dimensional measurement processing of measuring the three-dimensional shape of the subject from the captured image acquired from measurement head 200 and by performing search processing (searching process) of searching for the shape of workpiece W in the measured three-dimensional shape. Therefore, measurement unit 12 includes a point cloud data generation unit 121 that performs a three-dimensional measurement processing and a workpiece detection unit 122 that performs search processing.

Point cloud data generation unit 121 performs a three-dimensional measurement of the visual field area of measurement head 200 disposed at each measurement position on the basis of the captured image corresponding to the each measurement position, and generates three-dimensional point cloud data. The three-dimensional point cloud data represents three-dimensional coordinates of respective ones of points on a subject surface (measurement surface) located in the visual field area of measurement head 200.

As the three-dimensional measurement processing, for example, a triangulation method or a coaxial method can be adopted. The triangulation method is a method in which optical axes of image capturing and light projection are separated by a base length, and a parallax is converted into a distance. Triangulation methods include an active method and a passive method. Active methods include a structured illumination method, a phase shift method, and a spatial coding method. The coaxial system is a system in which an optical axis of image capturing and an optical axis of a distance measurement unit are set to be the same. The distance measurement unit includes a focus method. In addition, a time of flight (TOF) method is also included as a method close to the coaxial method. Point cloud data generation unit 121 may perform the three-dimensional measurement processing by using any one of these methods. For example, the three-dimensional measurement processing is performed using the phase shift method.

Workpiece detection unit 122 detects the position and orientation of workpiece W by three-dimensional search. Specifically, by collating the plurality of pieces of template data 153 stored in storage unit 15 with the three-dimensional point cloud data, workpiece detection unit 122 searches for data similar to the template from the three-dimensional point cloud data. The data searched for corresponds to data at a part where workpiece W is located. Workpiece detection unit 122 detects the position and orientation of workpiece W on the basis of the data that is similar to the template and is retrieved from the three-dimensional point cloud data. The position and orientation of workpiece W detected by workpiece detection unit 122 is indicated by the camera coordinate system.

Workpiece detection unit 122 may detect the position and orientation of workpiece W by using a known detection algorithm. Specifically, workpiece detection unit 122 calculates a correlation value between the three-dimensional point cloud data and template data 153, and determines that workpiece W is present when the calculated correlation value is greater than or equal to a first threshold. Then, workpiece detection unit 122 detects the position and orientation of the workpiece on the basis of template data 153 having the highest correlation value.

Note that measurement unit 12 may measure the position and orientation of workpiece W a plurality of times for each measurement position.

(D-4. Evaluation unit)

Evaluation unit 13 includes a correlation value calculation unit 131, a repetition accuracy calculation unit 132, a movement error calculation unit 133, and a determination unit 134.

Correlation value calculation unit 131 calculates, for each measurement position, the correlation value between the three-dimensional point cloud data and template data 153 as an evaluation value for evaluating the measurement result of measurement unit 12. Correlation value calculation unit 131 calculates a correlation value with respect to template data 153 that is most similar to the three-dimensional point cloud data among the plurality of pieces of template data 153. Correlation value calculation unit 131 calculates, for example, a correlation value (correlation value of surface) indicating similarity of a surface element that is a characteristic part. Alternatively, correlation value calculation unit 131 may calculate a correlation value (correlation value of contour) indicating similarity of a contour element that is a characteristic part.

When measurement unit 12 measures the position and orientation of workpiece W for each measurement position a plurality of times, correlation value calculation unit 131 may calculate a representative value (for example, an average value, a median value, a maximum value, of a minimum value) of the correlation values obtained from the plurality of times of measurement.

For each measurement position, as an evaluation value for evaluating the measurement result of measurement unit 12, repetition accuracy calculation unit 132 calculates a repetition accuracy indicating variation in the plurality of positions and orientations obtained by the plurality of times of measurement. The repetition accuracy is represented by, for example, a value indicating variation in the parameter values of the coordinate transformation matrix $^{C}H_{W}$ indicating the position and orientation of workpiece W (for example, such a value includes a standard deviation and a difference between a maximum value and a minimum value).

Movement error calculation unit 133 calculates, for each measurement position, a movement error (hereinafter, also referred to as "linearity") as an evaluation value for evaluating the measurement result of measurement unit 12. The movement error indicates a difference between a first change amount, of the position and orientation of workpiece W in the camera coordinate system, estimated based on a movement amount of measurement head 200 from the reference position to each measurement position and a second change amount from the position and orientation measured at the reference position to the position and orientation measured at the each measurement position.

Movement error calculation unit 133 disposes, in a virtual space, the workpiece model at the position and orientation indicated by model position and orientation data 155 and disposes a first virtual viewpoint at the reference position. Movement error calculation unit 133 calculates the position and orientation (hereinafter, referred to as "first position and orientation") of the workpiece model when the workpiece model is viewed from the first virtual viewpoint. Furthermore, movement error calculation unit 133 disposes a second virtual viewpoint at each measurement position in the virtual space. Movement error calculation unit 133 calculates the position and orientation (hereinafter, referred to as "second position and orientation") of the workpiece model when the workpiece model is viewed from the second virtual viewpoint. Movement error calculation unit 133 calculates a difference between the first position and orientation and the second position and orientation as the first change amount.

Movement error calculation unit 133 calculates, as the second change amount, a difference between the position and orientation corresponding to the reference position and the position and orientation corresponding to each measurement position, the positions and orientations being obtained from the measurements by measurement unit 12. Then, movement error calculation unit 133 calculates a difference between the first change amount and the second change amount as the movement error (linearity).

Determination unit 134 determines a rank of a comprehensive evaluation result of the measurement result of the position and orientation of workpiece W at each measurement position by using the correlation value, the repetition accuracy, and the movement error.

For example, determination unit 134 determines in which of three ranks the comprehensive evaluation result is. Determination unit 134 determines that the comprehensive evaluation result is in rank "A" when all of the following conditions (a) to (c) are satisfied. Determination unit 134 determines that the comprehensive evaluation result is in rank "B" when the following condition (a) is satisfied and at least one of the conditions (b) and (c) is not satisfied. Determination unit 134 determines that the comprehensive evaluation result is in rank "C" when the following condition (a) is not satisfied.

(a) The correlation value is greater than or equal to the predetermined first threshold.
(b) The repetition accuracy is less than or equal to a predetermined second threshold.
(c) The movement error is equal to or less than a predetermined third threshold.

(D-5. Presentation unit)

Presentation unit 14 includes a map generation unit 141, a virtual image generation unit 142, and a screen generation unit 143.

Map generation unit 141 uses measurement position list 154 and the evaluation result by evaluation unit 13 to generate a map indicating a correspondence relationship between each of the plurality of measurement positions and the evaluation result.

Virtual image generation unit 142 disposes, in the virtual space, the workpiece model at the position and orientation indicated by model position and orientation data 155 and disposes a virtual viewpoint at one designated measurement position. Furthermore, virtual image generation unit 142 disposes, in the virtual space, a virtual reference point at the same position as the reference point. Then, virtual image generation unit 142 generates a virtual image when the virtual reference point is viewed from the virtual viewpoint.

Screen generation unit 143 generates a screen including a map (hereinafter, the screen is referred to as "performance report screen" and displays the performance report screen on display 500. Screen generation unit 143 may receive designation of one measurement position from the plurality of measurement positions on the map and may causes the performance report screen to include a virtual image corresponding to the designated measurement position. Further, screen generation unit 143 may cause the performance report screen to include an image generated from the three-dimensional point cloud data corresponding to the designated measurement position (hereinafter, the point cloud data is referred to as "point cloud state diagram"). The point cloud state diagram may be, for example, a range image.

<E. Flow of assistance process>

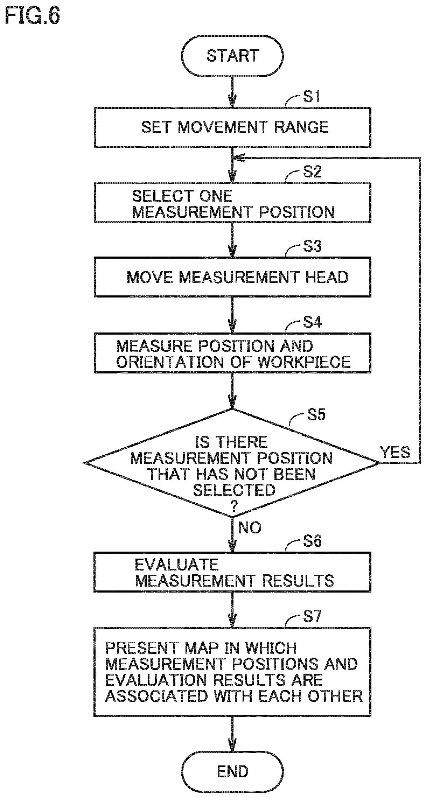

Fig. 6 is a flowchart illustrating a flow of the assistance process in the assistance system. Fig. 6 illustrates a flow of process performed by CPU 101 of image sensor controller 100.

First, CPU 101 sets the movement range of measurement head 200 in response to the input to input device 600 (step S1).

Next, CPU 101 selects one measurement position of a plurality of measurement positions within the movement range (step S2). CPU 101 uses robot 300 to move measurement head 200 to the selected measurement position (step S3). Specifically, CPU 101 generates a movement command to move measurement head 200 to the selected measurement position, and outputs the generated movement command to robot controller 400.

CPU 101 measures the position and orientation of workpiece W by using the captured image obtained by the image capturing by measurement head 200 located at the measurement position (step S4).

Next, CPU 101 determines whether there is a measurement position, of the plurality of measurement positions, not having been selected (step S5). If there is a measurement position that has not been selected (step S5: YES), the process of CPU 101 returns to step S2. When there is no measurement position not having been selected (step S5: NO), the process of CPU 101 proceeds to step S6. In this manner, CPU 101 sequentially moves measurement head 200 to the plurality of measurement positions by using robot 300, and measures the position and orientation of workpiece W using the captured image for each of the plurality of measurement positions.

In step S6, CPU 101 evaluates the measurement result of the position and orientation of workpiece W for each of the plurality of measurement positions. Next, CPU 101 presents, on display 500, a map in which respective ones of the plurality of measurement positions are associated with the evaluation results (step S7).

<F. Screen to assist setting of movement range>

CPU 101 displays on display 500 a screen for assisting the setting of the movement range (hereinafter, the screen is referred to as "setting screen"); and, in response to an input to the setting screen, CPU 101 registers (sets) information related to the movement range.

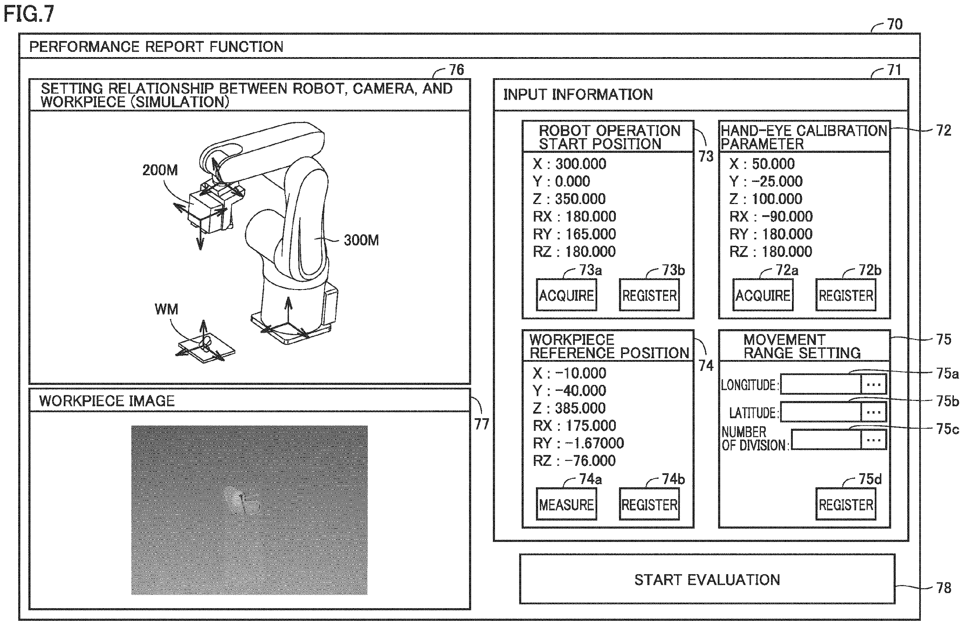

Fig. 7 is a diagram illustrating an example of a screen (setting screen) that assists setting of the movement range. As illustrated in Fig. 7, a setting screen 70 includes areas 71, 76, and 77 and a button 78. Area 71 includes sub-areas 72 to 75 for acquiring and registering various types of information.

In sub-area 72 there are displayed a button 72a to acquire calibration data 151 and a button 72b to register calibration data 151. Furthermore, in sub-area 72 there are displayed values (parameter values of the coordinate transformation matrix $^F H_C$ that transforms the flange coordinate system into the camera coordinate system) indicated by acquired calibration data 151.

In response to button 72a being clicked, CPU 101 acquires a result of a previously performed hand-eye calibration, and generates calibration data 151 on the basis of the acquired result. Alternatively, CPU 101 may display a screen prompting implementation of a hand-eye calibration and acquire a result of the hand-eye calibration performed in response to an input to the screen. Then, CPU 101 generates calibration data 151 on the basis of the result of the hand-eye calibration.

In response to button 72b being clicked, CPU 101 registers generated calibration data 151.

In sub-area 73 there are displayed a button 73a to acquire a current state of robot 300 and a button 73b to register an operation start position of robot 300. Furthermore, in sub-area 73 there are displayed, as the acquired values indicating the current state of robot 300, parameter values indicating the position and orientation of flange plate 303 in the robot base coordinate system. Specifically, in sub-area 73 there are displayed parameter values of the coordinate transformation matrix $^B H_F$ that transforms the robot base coordinate system into the flange coordinate system.

In response to button 73a being clicked, CPU 101 acquires, from robot controller 400, information indicating the current state of robot 300. The information indicating the current state of robot 300 includes, for example, an amount of rotation about each axis of robot 300 and parameter values indicating the position and orientation of flange plate 303. On the basis of the acquired information, CPU 101 makes sub-area 73 include parameter values indicating the position and orientation of flange plate 303.

In response to button 73b being clicked, CPU 101 calculates the current position and orientation of measurement head 200 on the basis of the information indicating the current state of robot 300 and calibration data 151. The position and orientation is represented by the coordinate transformation matrix $^B H_C$ that transforms the robot base coordinate system into the camera coordinate system. CPU 101 registers the calculated position and orientation as the position and orientation to which number "0" (the number for the reference position) is assigned in measurement position list 154.

In sub-area 74 there are displayed a button 74a to measure the position and orientation of workpiece W and a button 74b to register the position and orientation of the workpiece model. Further, in sub-area 74 there are displayed parameter values indicating the measured position and orientation of workpiece W. Specifically, in sub-area 74 there are displayed parameter values of the coordinate transformation matrix $^C H_W$ that transforms the camera coordinate system into the workpiece coordinate system. Alternatively, in sub-area 74 there may be displayed parameter values of the coordinate transformation matrix $^B H_W$ that transforms the robot base coordinate system into the workpiece coordinate system.

In response to button 74a being clicked, CPU 101 outputs a projection instruction and an image capturing instruction to measurement head 200, and acquires a captured image from measurement head 200. CPU 101 measures the position and orientation of workpiece W on the basis of the acquired captured image. The measured position and orientation of workpiece W is represented by the coordinate transformation matrix $^C H_W$ that transforms the camera coordinate system into the workpiece coordinate system. CPU 101 makes the sub-area 74 include the parameter values of the coordinate transformation matrix $^C H_W$. However, CPU 101 may calculate the coordinate transformation matrix $^B H_W$ that transforms the robot base coordinate system into the workpiece coordinate system by using the following coordinate transformation matrices: the coordinate transformation matrix $^C H_W$; the coordinate transformation matrix $^B H_F$ obtained in response to the click on button 73a; and the coordinate transformation matrix $^F H_C$ obtained in response to the click on button 72a. Then, CPU 101 may make the sub-area 74 include the parameter values of the coordinate transformation matrix $^B H_W$.

In response to button 74b being clicked, CPU 101 determines the measured position and orientation of workpiece W as the position and orientation of the workpiece model. CPU 101 generates model position and orientation data 155 indicating the determined position and orientation of the workpiece model, and registers model position and orientation data 155. Model position and orientation data 155 is data based on the robot base coordinate system.

Furthermore, in response to button 74b being clicked, CPU 101 determines, as the reference point, a point that is the center of the captured image and has the same altitude (Z coordinate value) as the center of gravity of workpiece W. Alternatively, CPU 101 may determine, as the reference point, a point that is the center of the captured image and has the same altitude (Z coordinate value) as an origin of the workpiece model when the workpiece model is superimposed on the measured position and orientation.

In sub-area 75 there are displayed input fields 75a to 75c for setting the movement range of measurement head 200 and a button 75d to register the movement range.

To input fields 75a and 75b, the following ranges are input: a longitude range and a latitude range on the spherical surface that is centered on the reference point and has a radius equal to a distance between the reference point and the reference position that is registered in response to the click on button 73b. CPU 101 determines the longitude range and the latitude range input to the input fields 75a and 75b as the movement range on the spherical surface.

The number of divisions when the movement range is divided into a plurality of regions is input to the input field 75c. CPU 101 divides the movement range into a plurality of regions in accordance with the number of divisions input to the input field 75c, and sets the measurement positions, one for each of the plurality of regions. For example, CPU 101 sets a center or vertex of each of the regions as corresponding one of the measurement positions.

For the plurality of measurement positions, CPU 101 causes measurement position list 154 to include a list of each measurement position and the orientation of measurement head 200 at the each measurement position. As described above, the orientation of measurement head 200 at each measurement position is set such that the orientation of measurement head 200 when viewed from the reference point is constant. That is, the orientation of measurement head 200 at each measurement position is set to be the same as the orientation of measurement head 200 at the reference position when viewed from the reference point. The position and orientation of measurement head 200 at each measurement position is represented by the coordinate transformation matrix $^BH_C$ that transforms the robot base coordinate system into the camera coordinate system.

In area 76 there is displayed a simulation image in which respective models of robot 300, measurement head 200, and workpiece W are arranged in a virtual space is displayed so that a positional relationship between robot 300, measurement head 200, and workpiece W can be easily grasped. CPU 101 disposes, in the virtual space, a model of robot 300 (robot model 300M) on the basis of the information acquired in response to the clicking of button 73a. CPU 101 disposes, in the virtual space, a model of measurement head 200 (measurement head model 200M) on the basis of calibration data 151. CPU 101 disposes, in the virtual space, a workpiece model WM on the basis of the position and orientation measured in response to button 74a being clicked. CPU 101 generates a simulation image when the models are viewed from a viewpoint previously set in the virtual space.

In area 77 there is displayed a captured image obtained in response to button 74a being clicked. In area 77, for example, a captured image captured under a uniform irradiation condition is displayed.

While checking areas 76 and 77, the user operates robot controller 400 to adjust the position and orientation of measurement head 200 and adjusts the position of workpiece W. After a desired state is achieved by the adjustment, the user may click buttons 73b, 74b, and 75d.

In response to button 78 being clicked, CPU 101 generates a movement command to sequentially move measurement head 200 to the plurality of measurement positions in accordance with measurement position list 154, and outputs the generated movement command to robot controller 400. CPU 101 measures the position and orientation of workpiece W using the captured image acquired from measurement head 200 at each measurement position.

<G. Performance report screen>

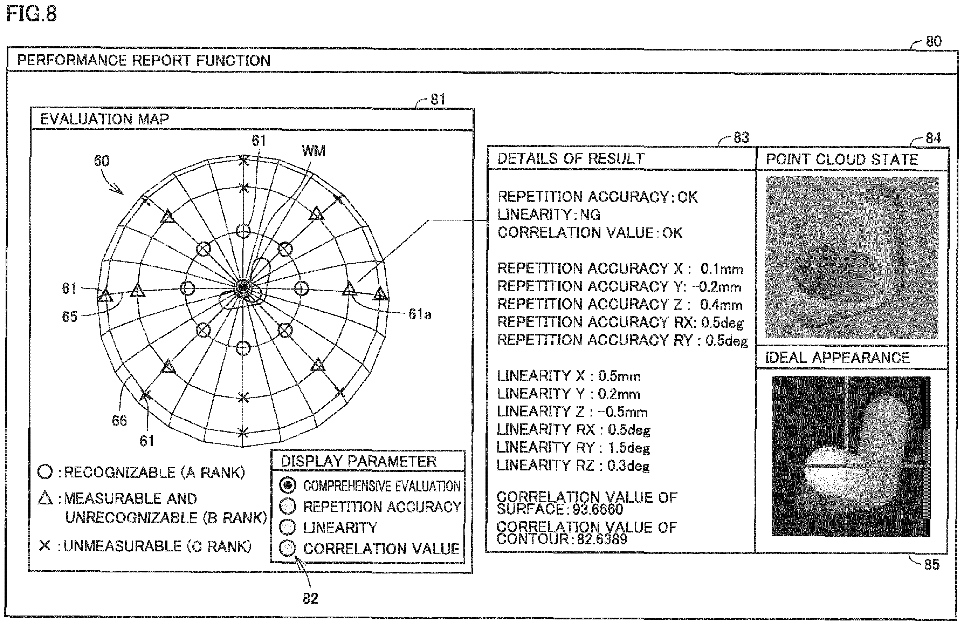

Fig. 8 is a diagram illustrating an example of the performance report screen. As illustrated in Fig. 8, a performance report screen 80 includes areas 81 and 83 to 85.

In area 81 there is displayed map 60 representing a correspondence relationship between each of the plurality of measurement positions and the evaluation result. Further, in area 81 there is displayed radio buttons 82 to select an evaluation item.

CPU 101 generates map 60 representing a correspondence relationship between each of the plurality of measurement positions and corresponding evaluation result of the evaluation item selected by radio buttons 82, and CPU 101 displays generated map 60 in area 81.

At the plurality of measurement positions on map 60 there are disposed marks 61 indicating the evaluation results. As illustrated in Fig. 8, when the evaluation item "comprehensive evaluation" is selected, CPU 101 sets, to be "O", a shape of mark 61 at the measurement position at which the comprehensive evaluation result belongs to rank "A", CPU 101 sets, to be "△", the shape of mark 61 at the measurement position at which the comprehensive evaluation result belongs to rank "B", and CPU 101 sets, to be "×", the shape of mark 61 at the measurement position at which the comprehensive evaluation result belongs to rank "C". As a result, by checking map 60, the user can easily grasp the rank of the comprehensive evaluation result for each measurement position.

The plurality of measurement positions are located on the spherical surface that is centered on the reference point and has a radius equal to the distance between the reference point and imaging unit 202 of measurement head 200. Therefore, as illustrated in Fig. 8, map 60 has a hemispherical shape. In other words, map 60 is represented in a polar coordinate system with a center of the sphere as an origin. Each measurement position is represented by a radius and two deflection angles in a polar coordinate system. The radius is a distance between the reference point and the reference position. The two deflection angles are represented by latitude and longitude on the spherical surface. CPU 101 may make map 60 include a plurality of meridians 65 and a plurality of latitude lines 66 on the spherical surface in order to make the user understand that map 60 has a hemispherical shape. As a result, the user can easily grasp the positional relationship among the plurality of measurement positions in a three-dimensional space.

Note that, in the example illustrated in Fig. 8, map 60 is displayed such that the reference position is at a center. However, CPU 101 may move and rotate map 60 in accordance with a user's operation. For example, CPU 101 rotates or moves map 60 in a drag direction in response to the drag operation of the mouse. Alternatively, CPU 101 may rotate map 60 about a designated rotation axis in response to a user's operation. The rotation axis is designated from among three axes that pass through the reference point and are orthogonal to each other. For example, CPU 101 presents map 60 when viewed from a horizontal direction (direction orthogonal to a line connecting the reference point and the reference position) or presents map 60 when viewed from an oblique 45° direction (direction forming an angle of 45° with the line connecting the reference point and the reference position). Therefore, the user can observe map 60 when viewed from a desired viewpoint. As a result, the convenience of the user is improved.

Furthermore, as illustrated in Fig. 8, CPU 101 may make map 60 include workpiece model WM having the position and orientation indicated by model position and orientation data 155. As a result, the user can easily grasp the position and relationship between workpiece W and each measurement position.

In a case where any one of "repetition accuracy", "linearity", and "correlation value" is selected as the evaluation item, CPU 101 changes the shapes of marks 61 depending on the values of the selected evaluation item.

For example, in a case where the evaluation item "correlation value" is selected, CPU 101 sets, to be "○", the shape of mark 61 at the measurement position where the correlation value is greater than or equal to the first threshold, CPU 101 sets, to be "△", the shape of mark 61 at the measurement position where the correlation value is greater than or equal to a fourth threshold and less than the first threshold, and CPU 101 sets, to be "×", the shape of mark 61 at the measurement position where the correlation value is less than the fourth threshold. The fourth threshold is smaller than the first threshold. Although the first threshold is adopted as the threshold to be compared with the correlation value, the rank of the "correlation value" may be evaluated using a threshold different from the first threshold. That is, the threshold for determining the ranks of the "correlation value" can be arbitrarily set.

With respect to the "repetition accuracy" and the "linearity", thresholds are previously determined, and ranks of the "repetition accuracy" and the "linearity" are evaluated depending on comparison results with the thresholds.

The number of ranks for classifying each of the evaluation items "repetition accuracy", "linearity", and "correlation value", and "comprehensive evaluation" is not limited to three. For example, each evaluation item may be classified into two ranks, or may be classified into four or more ranks (for example, five ranks).

CPU 101 receives selection of any of marks 61 on map 60. In the example illustrated in Fig. 8, mark 61a is selected.

In area 83, there is displayed an evaluation result corresponding to the measurement position of mark 61a selected on map 60. Specifically, the values of the repetition accuracy, the linearity, and the correlation value are displayed. Furthermore, in area 83, there are also displayed a determination result about whether the above conditions (a) to (c) are satisfied. When the correlation value satisfies the condition (a) that the correlation value is greater than or equal to the predetermined first threshold, a character string "Correlation value: OK" is displayed as illustrated in Fig. 8. When the movement error does not satisfy the condition (c) that the movement error (linearity) is less than or equal to the predetermined third threshold, a character string "Linearity: NG" is displayed as illustrated in Fig. 8.

In area 84, there is displayed a point cloud state diagram generated from the three-dimensional point cloud data corresponding to the measurement position of mark 61a selected on map 60.

In area 85, there is displayed a virtual image corresponding to the measurement position of mark 61a selected on map 60. As described above, the virtual image represents the workpiece model when viewed from the measurement position. Therefore, the virtual image corresponds to an ideal image viewed from the measurement position.

By comparing the point cloud state diagram displayed in area 84 with the virtual image displayed in the area 85, the user can visually recognize whether the measurement result of the position and orientation of workpiece W is good or bad.

<H. Example of condition setting for measurement>

The conditions for measuring the position and orientation of workpiece W include image capturing conditions and search conditions. The image capturing conditions include, for example, an intensity of illumination light projected from projection unit 201 on workpiece W, a shutter speed of imaging unit 202, and a camera gain. The search conditions include a detection condition used by workpiece detection unit 122 (for example, a threshold set for the correlation value between the three-dimensional point cloud data and template data 153, or the like.).

The user performs condition setting for measuring the position and orientation of workpiece W while checking performance report screen 80 as illustrated in Fig. 8.

For example, the user selects a comprehensive evaluation using radio button 82 and checks map 60. When the comprehensive evaluation results of the measurement positions belonging to a wide range centered on a zenith of hemispherical map 60 are in rank "A", the user determines that it is not necessary to change the measurement conditions. When a distribution range of the measurement positions where the comprehensive evaluation results are in rank "A" is small, or when the distribution range is wide but the measurement position of rank "B" or "C" is present in a part of the distribution range, the user determines that it is necessary to change the measurement conditions.

When the distribution range of the measurement positions where the comprehensive evaluation results are in rank "A" is small, the user selects "Correlation value" by radio button 82, for example. As a result, the user can grasp where in the range the correlation value is small. The user designates the measurement position where the correlation value is small, and checks the details of the evaluation result displayed in area 83 and the point cloud state diagram displayed in area 84. Depending on a result of the check, the user attempts adjustments (A) to (C) to be described later.

When the measurement position belonging to rank "B" or "C" is in a part of the distribution range of the measurement positions where the comprehensive evaluation results are in rank "A", the user designates the measurement position where the comprehensive evaluation result is in rank "B" or "C". Then, the user checks the details of the evaluation result displayed in area 83, and narrows down a cause of a decrease in a measurement performance. The user attempts the following adjustments (A) to (C) depending on the narrowed cause.

Adjustment (A): when the correlation value is small, there is a possibility that the three-dimensional point cloud data is insufficient. Therefore, in a case where the point cloud is insufficient in the point cloud state diagram displayed in area 84, the user checks whether the correlation value is improved by adjusting the intensity of the illumination light, the shutter speed, the camera gain, and the like.

Adjustment (B): when there is a problem in the repetition accuracy (that is, in a case where a value indicating the repetition accuracy is large), there is a possibility that a part of the three-dimensional point cloud data is erroneously detected or detection is missed. Therefore, in a case where erroneous detection or missed detection is found in the point cloud state diagram displayed in area 84, the user checks whether the repetition accuracy is improved by adjusting the intensity of the illumination light, the shutter speed, the camera gain, and the like.

Adjustment (C): when there is a problem in the movement error (linearity) (that is, in a case where the movement error is large), there is a possibility that a problem occurs in matching between the three-dimensional point cloud data and template data 153. Therefore, the user selects "Correlation value" by radio button 82 and compares the correlation value belonging to rank "A" with the correlation value belonging to rank "B". On the basis of a result of the comparison, the user determines whether the first threshold is correctly set. The user considers whether the movement error (linearity) can be improved by adjusting the first threshold. In a case where the movement error (linearity) is not improved only by the adjustment of the first threshold, the user considers whether improvement can be made so that a correct candidate can be measured by changing other conditions (for example, a search range in the captured image, a type and number of pieces of template data 153, and the like) related to matching between the three-dimensional point cloud data and template data 153.

In this manner, the user can easily set the conditions for measuring the position and orientation of workpiece W by attempting the adjustments (A) to (C) while checking performance report screen 80.

<I. Variations>

In map 60, CPU 101 may use different colors for marks 61 displayed at respective ones of the measurement positions, depending on the evaluation results. In this case, the shape of mark 61 may be the same regardless of the evaluation result.

A method of determining the rank of the comprehensive evaluation result by determination unit 134 is not limited to the above method. For example, determination unit 134 may determine that the comprehensive evaluation result is in rank "A" when the condition (a) is satisfied and one of the conditions (b) and (c) is satisfied. Alternatively, determination unit 134 may determine that the comprehensive evaluation result is in rank "A" when the correlation value satisfies a condition (d) that the correlation value is greater than or equal to a predetermined fifth threshold. The fifth threshold is greater than the first threshold.

Instead of map 60 or in addition to map 60, CPU 101 may generate a list in which the measurement positions and the evaluation results are associated with each other. For example, CPU 101 may generate a file internally representing map 60 in a list format, and may store the file or output the file to an external device. CPU 101 can present map 60 by reading the stored file. An external device having received the file can present map 60 by reading the file. The file is data in which the measurement positions and the evaluation results are associated with each other.

By using a plurality of the stored files, CPU 101 may generate a composite map obtained by combining a plurality of maps 60 corresponding to respective ones of the plurality of files. For example, by combining a plurality of maps 60 whose movement ranges of measurement head 200 are different from each other, it is possible to generate a combined map that covers a large range and includes all the movement ranges. Even in a case where a plurality of evaluations including an initial evaluation and an additional evaluation are performed and a plurality of files therefore exists, a plurality of maps 60 are aggregated as one composite map. As a result, convenience of the user is improved.

§3 Additional statements

As described above, the present embodiment includes the following disclosure.

(Configuration 1)

An assistance system (1) including:

an imaging device (200) configured to perform image capturing of an object (W);
a setting unit (11, 101) configured to set a movement range of the imaging device;
a robot (300) configured to sequentially move the imaging device to a plurality of measurement positions within the movement range;
a measurement unit (12, 101) configured to measure, for each of the plurality of measurement positions, position and orientation of the object by using a captured image obtained by image capturing by the imaging device;
an evaluation unit (13, 101) configured to evaluate a measurement result by the measurement unit; and
a presentation unit (14,101) configured to present a map (60) representing a correspondence relationship between each of the plurality of measurement positions and an evaluation result by the evaluation unit.

(Configuration 2)

The assistance system described in Configuration 1, wherein the evaluation unit calculates at least one evaluation value representing the evaluation result,

the presentation unit receives, on the map, designation of one measurement position of the plurality of measurement positions, and
in response to the designation of the one measurement position, the presentation unit presents the at least one evaluation value corresponding to the one measurement position.

(Configuration 3)

The assistance system described in Configuration 1, wherein the measurement unit generates three-dimensional point cloud data of a visual field area of the imaging device, based on the captured image corresponding to each of the plurality of measurement positions,

the presentation unit receives, on the map, designation of one measurement position of the plurality of measurement positions, and
in response to the designation of the one measurement position, the presentation unit presents an image generated from the three-dimensional point cloud data corresponding to the one measurement position.

(Configuration 4)

The assistance system described in Configuration 3, wherein the setting unit sets a reference position within the movement range and registers position and orientation of a model of the object such that the position and orientation of the model coincides with the position and orientation of the object measured from the captured image corresponding to the reference position, and
in response to the designation of the one measurement position, the presentation unit generates a virtual image of the model when viewed from the one measurement position, and presents the virtual image.

(Configuration 5)

The assistance system described in Configuration 2, wherein the measurement unit generates three-dimensional point cloud data of a visual field area of the imaging device, based on the captured image, and measures the position and orientation, based on comparison between the three-dimensional point cloud data and template data, and
the at least one evaluation value includes a correlation value between the three-dimensional point cloud data and the template data.

(Configuration 6)

The assistance system described in Configuration 2 or 5, wherein the measurement unit performs a plurality of times of measurement for each of the plurality of measurement positions, and
the at least one evaluation value includes a value representing a repetition accuracy of the plurality of times of measurement.

(Configuration 7)

The assistance system described in any of Configurations 2, 5, and 6, wherein the plurality of measurement positions include a reference position,

the measurement unit measures the position and orientation of the object in a camera coordinate system taking the imaging device as a reference, and

the at least one evaluation value includes, for each of the plurality of measurement positions, a value representing a difference between a first change amount, of the position and orientation of the object in the camera coordinate system, estimated based on a movement amount from the reference position to the each of the plurality of measurement positions and a second change amount from the position and orientation measured at the reference position to the position and orientation measured at the each of the plurality of measurement positions.

(Configuration 8)

The assistance system according to any one of configurations 1 to 7, wherein the plurality of measurement positions are on a same spherical surface, and the map is represented in a polar coordinate system with a center of the sphere as an origin.

(Configuration 9)

An image processing device (100) including:

a setting unit (11, 101) configured to set a movement range of an imaging device configured to perform image capturing of an object (W);

a measurement unit configured to measure, for each of a plurality of measurement positions within the movement range, position and orientation of the object by using a captured image obtained from imaging device (200) located at the each of the plurality of measurement positions; and

an evaluation unit (13, 101) configured to evaluate a measurement result by measurement unit (12, 101); and

a presentation unit (14, 101) configured to present a map (60) representing a correspondence relationship between each of the plurality of measurement positions and an evaluation result by the evaluation unit.

(Configuration 10)

An assistance method including:

setting a movement range of an imaging device (200) configured to perform image capturing of an object (W);

sequentially moving the imaging device to a plurality of measurement positions within the movement range by using a robot

measuring, for each of the plurality of measurement positions, position and orientation of the object by using a captured image obtained by image capturing by the imaging device;

evaluating a measurement result of the position and orientation; and

presenting a map representing a correspondence relationship between respective ones of the plurality of measurement positions and an evaluation result.

(Configuration 11)

A program for causing a computer to perform the assistance method according to Configuration 10.

Although the embodiment of the present invention has been described, it should be considered that the embodiment disclosed herein is illustrative in all respects and not restrictive. The scope of the present invention is defined by the claims, and the scope of the present invention is intended to include all modifications within meanings and scope that are equivalent to the scope of the claims.

REFERENCE SIGNS LIST

1: assistance system: 11: setting unit: 12: measurement unit: 13: evaluation unit: 14: presentation unit: 15: storage unit: 60: map: 61, 61a: mark: 65: meridian: 66: latitude line: 70: setting screen: 71, 76, 77, 81, 83 to 85: area: 72 to 75: sub-area: 72a, 72b, 73a, 73b, 74a, 74b, 75d, 78: button: 75a to 75c: input field: 80: performance report screen: 82: radio button: 100: image sensor controller: 101: CPU: 102: main memory: 103: hard disk: 104: measurement head interface: 104a: image buffer: 105: Input interface: 106: display controller: 107: communication interface: 108: data reader and writer: 109: bus: 111: movement range determination unit: 112: registration unit: 113: movement command unit: 121: point cloud data generation unit: 122: workpiece detection unit: 131: correlation value calculation unit: 132: repetition accuracy calculation unit: 133: movement error calculation unit: 134: determination unit: 141: map generation unit: 142: virtual image generation unit: 143: screen generation unit: 151: calibration data: 152: workpiece shape data: 153: template data: 154: measurement position list: 155: model position and orientation data: 200: measurement head: 200M: measurement head model: 201: projection unit: 202: imaging unit: 300: robot: 300M: robot model: 301: articulated arm: 302: base: 303: flange plate: 304: end effector: 305: support member: 400: robot controller: 500: display: 600: input device: 700: memory card: W: workpiece: WM: workpiece model

**Claims**

1.  An assistance system comprising:

    an imaging device configured to perform image capturing of an object;
    a setting unit configured to set a movement range of the imaging device;
    a robot configured to sequentially move the imaging device to a plurality of measurement positions within the movement range;
    a measurement unit configured to measure, for each of the plurality of measurement positions, position and orientation of the object by using a captured image obtained by the image capturing by the imaging device;
    an evaluation unit configured to evaluate a measurement result by the measurement unit; and
    a presentation unit configured to present a map representing a correspondence relationship between each of the plurality of measurement positions and an evaluation result by the evaluation unit.

2.  The assistance system according to claim 1, wherein the evaluation unit calculates at least one evaluation value representing the evaluation result,

    the presentation unit receives, on the map, designation of one measurement position of the plurality of measurement positions, and
    in response to the designation of the one measurement position, the presentation unit presents the at least one evaluation value corresponding to the one measurement position.

3.  The assistance system according to claim 1, wherein the measurement unit generates three-dimensional point cloud data of a visual field area of the imaging device, based on the captured image corresponding to each of the plurality of measurement positions,

    the presentation unit receives, on the map, designation of one measurement position of the plurality of measurement positions, and
    in response to the designation of the one measurement position, the presentation unit presents an image generated from the three-dimensional point cloud data corresponding to the one measurement position.

4.  The assistance system according to claim 3, wherein the setting unit sets a reference position within the movement range and registers a position and orientation of a model of the object such that the position and orientation of the model coincides with the position and orientation of the object measured from the captured image corresponding to the reference position, and
in response to the designation of the one measurement position, the presentation unit generates a virtual image of the model when viewed from the one measurement position, and presents the virtual image.

5.  The assistance system according to claim 2, wherein the measurement unit generates three-dimensional point cloud data of a visual field area of the imaging device, based on the captured image, and measures the position and orientation, based on the three-dimensional point cloud data and template data, and the at least one evaluation value includes a correlation value between the three-dimensional point cloud data and the template data.

6.  The assistance system according to claim 2 or 5, wherein the measurement unit performs a plurality of times of measurement for each of the plurality of measurement positions, and
the at least one evaluation value includes a value representing a repetition accuracy of the plurality of times of measurement.

7.  The assistance system according to any one of claims 2, 5, and 6, wherein the plurality of measurement positions include a reference position,

    the measurement unit measures the position and orientation of the object in a camera coordinate system taking the imaging device as a reference, and
    the at least one evaluation value includes, for each of the plurality of measurement positions, a value representing a difference between a first change amount, of the position and orientation of the object in the camera coordinate system, estimated based on a movement amount from the reference position to the each of the plurality of measurement positions and a second change amount from the position and orientation measured at the reference position to the position and orientation measured at the each of the plurality of measurement positions.

8.  The assistance system according to any one of claims 1 to 7, wherein the plurality of measurement positions are on a same spherical surface, and
the map is represented in a polar coordinate system with a center of the sphere as an origin.

9.  An image processing device comprising:

    a setting unit configured to set a movement range of an imaging device configured to perform image capturing of an object;

a measurement unit configured to measure, for each of a plurality of measurement positions within the movement range, position and orientation of the object by using a captured image obtained from the imaging device located at the each of the plurality of measurement positions; and

an evaluation unit configured to evaluate a measurement result by the measurement unit; and

a presentation unit configured to present a map representing a correspondence relationship between each of the plurality of measurement positions and an evaluation result by the evaluation unit.

10. An assistance method comprising:

setting a movement range of an imaging device configured to perform image capturing of an object;

sequentially moving the imaging device to a plurality of measurement positions within the movement range by using a robot;

measuring, for each of the plurality of measurement positions, position and orientation of the object by using a captured image obtained by image capturing by the imaging device;

evaluating a measurement result of the position and orientation; and

presenting a map representing a correspondence relationship between each of the plurality of measurement positions and an evaluation result.

11. A program for causing a computer to perform the assistance method according to claim 10.

FIG.1

IMAGE SENSOR CONTROLLER 100

SETTING UNIT 11

MEASUREMENT UNIT 12

PRESENTATION UNIT 14

EVALUATION UNIT 13

ROBOT CONTROLLER 400

EP 4 292 777 A1

FIG.2

FIG.3

# FIG.4

FLANGE
COORDINATE SYSTEM

303

$^{F}H_{C}$

$X_{c}$

$Z_{f}$

$O_{f}$

$X_{f}$

$Y_{f}$

$Y_{c}$

$O_{c}$

CAMERA
COORDINATE SYSTEM

200

$Z_{c}$ 202

$^{C}H_{W}$

$^{B}H_{F}$

300

WORKPIECE
COORDINATE SYSTEM

$Z_{w}$

W

$Z_{b}$

$X_{w}$

$O_{w}$

$Y_{w}$

$O_{b}$

$X_{b}$

$Y_{b}$ 302

ROBOT BASE
COORDINATE SYSTEM

# FIG.5

IMAGE SENSOR CONTROLLER — 100

**400** ROBOT CONTROLLER

**600** INPUT DEVICE

**500** DISPLAY

**200** MEASUREMENT HEAD

**11** SETTING UNIT
- **111** MOVEMENT RANGE DETERMINATION UNIT
- **112** REGISTRATION UNIT
- **113** MOVEMENT COMMAND UNIT

**12** MEASUREMENT UNIT
- **121** POINT CLOUD DATA GENERATION UNIT
- **122** WORKPIECE DETECTION UNIT

**14** PRESENTATION UNIT
- **141** MAP GENERATION UNIT
- **142** VIRTUAL IMAGE GENERATION UNIT
- **143** SCREEN GENERATION UNIT

**13** EVALUATION UNIT
- **131** CORRELATION VALUE CALCULATION UNIT
- **132** REPETITION ACCURACY CALCULATION UNIT
- **133** MOVEMENT ERROR CALCULATION UNIT
- **134** DETERMINATION UNIT

**15** STORAGE UNIT
- **151** CALIBRATION DATA
- **152** WORKPIECE SHAPE DATA
- **153** TEMPLATE DATA
- **154** MEASUREMENT POSITION LIST
- **155** MODEL POSITION AND ORIENTATION DATA

FIG.6

```
            ┌─────────────┐
            │    START    │
            └──────┬──────┘
                   │            S1
            ┌──────▼─────────────────┐
            │  SET MOVEMENT RANGE    │
            └──────┬─────────────────┘
                   │            S2
            ┌──────▼─────────────────┐◄──────────────┐
            │  SELECT ONE            │               │
            │  MEASUREMENT POSITION  │               │
            └──────┬─────────────────┘               │
                   │            S3                    │
            ┌──────▼─────────────────┐               │
            │  MOVE MEASUREMENT HEAD │               │
            └──────┬─────────────────┘               │
                   │            S4                    │
            ┌──────▼─────────────────┐               │
            │  MEASURE POSITION AND  │               │
            │  ORIENTATION OF WORKPIECE │            │
            └──────┬─────────────────┘               │
                   │            S5                    │
                  ╱ ╲                            YES  │
                 ╱IS THERE╲────────────────────────── ┘
                ╱MEASUREMENT POSITION╲
                ╲THAT HAS NOT BEEN  ╱
                 ╲  SELECTED       ╱
                  ╲     ?        ╱
                   ╲   ╱
                    │NO
                    │           S6
            ┌───────▼────────────────┐
            │  EVALUATE              │
            │  MEASUREMENT RESULTS   │
            └───────┬────────────────┘
                    │          S7
            ┌───────▼────────────────┐
            │ PRESENT MAP IN WHICH   │
            │ MEASUREMENT POSITIONS AND │
            │ EVALUATION RESULTS ARE │
            │ ASSOCIATED WITH EACH OTHER │
            └───────┬────────────────┘
                    │
            ┌───────▼──────┐
            │     END      │
            └──────────────┘
```

24

**FIG.7**

PERFORMANCE REPORT FUNCTION — 70

SETTING RELATIONSHIP BETWEEN ROBOT, CAMERA, AND WORKPIECE (SIMULATION) — 76

200M
300M
WM

WORKPIECE IMAGE — 77

INPUT INFORMATION — 71

**ROBOT OPERATION START POSITION** — 73
X : 300.000
Y : 0.000
Z : 350.000
RX : 180.000
RY : 165.000
RZ : 180.000
ACQUIRE — 73a
REGISTER — 73b

**HAND-EYE CALIBRATION PARAMETER** — 72
X : 50.000
Y : −25.000
Z : 100.000
RX : −90.000
RY : 180.000
RZ : 180.000
ACQUIRE — 72a
REGISTER — 72b

**WORKPIECE REFERENCE POSITION** — 74
X : −10.000
Y : −40.000
Z : 385.000
RX : 175.000
RY : −1.67000
RZ : −76.000
MEASURE — 74a
REGISTER — 74b

**MOVEMENT RANGE SETTING** — 75
LONGITUDE: [ ] [...] — 75a
LATITUDE: [ ] [...] — 75b
NUMBER OF DIVISION: [ ] [...] — 75c
REGISTER — 75d

START EVALUATION — 78

EP 4 292 777 A1

# FIG.8

FIG.8 — PERFORMANCE REPORT FUNCTION (80)

**EVALUATION MAP (81)**

O : RECOGNIZABLE (A RANK)

△ : MEASURABLE AND UNRECOGNIZABLE (B RANK)

× : UNMEASURABLE (C RANK)

**DISPLAY PARAMETER (82)**
- ◉ COMPREHENSIVE EVALUATION
- ○ REPETITION ACCURACY
- ○ LINEARITY
- ○ CORRELATION VALUE

**DETAILS OF RESULT (83)**

REPETITION ACCURACY: OK
LINEARITY: NG
CORRELATION VALUE: OK

REPETITION ACCURACY X : 0.1mm
REPETITION ACCURACY Y: −0.2mm
REPETITION ACCURACY Z : 0.4mm
REPETITION ACCURACY RX: 0.5deg
REPETITION ACCURACY RY : 0.5deg

LINEARITY X : 0.5mm
LINEARITY Y : 0.2mm
LINEARITY Z : −0.5mm
LINEARITY RX : 0.5deg
LINEARITY RY : 1.5deg
LINEARITY RZ : 0.3deg

CORRELATION VALUE OF SURFACE: 93.6660
CORRELATION VALUE OF CONTOUR: 82.6389

**POINT CLOUD STATE (84)**

**IDEAL APPEARANCE (85)**

EP 4 292 777 A1

**EP 4 292 777 A1**

## INTERNATIONAL SEARCH REPORT

| International application No. |
|---|
| PCT/JP2021/009562 |

A. CLASSIFICATION OF SUBJECT MATTER
Int. Cl. B25J13/08(2006.01)i
FI: B25J13/08 A

According to International Patent Classification (IPC) or to both national classification and IPC

B. FIELDS SEARCHED

Minimum documentation searched (classification system followed by classification symbols)
Int. Cl. B25J1/00-21/02, G06T7/00-7/90

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2020-163502 A (SEIKO EPSON CORP.) 08 October 2020 (2020-10-08), entire text, all drawings | 1-11 |
| A | JP 08-313225 A (NIPPONDENSO CO., LTD.) 29 November 1996 (1996-11-29), entire text, all drawings | 1-11 |
| A | JP 2019-185239 A (OMRON CORP.) 24 October 2019 (2019-10-24), entire text, all drawings | 1-11 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.05.2021 | 18.05.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

| International application No. |
| --- |
| PCT/JP2021/009562 |

| Patent Documents referred to in the Report | Publication Date | Patent Family | Publication Date |
| --- | --- | --- | --- |
| JP 2020-163502 A | 08.10.2020 | (Family: none) | |
| JP 08-313225 A | 29.11.1996 | (Family: none) | |
| JP 2019-185239 A | 24.10.2019 | US 2019/0308320 A1 entire text, all drawings EP 3550470 A1 CN 110348279 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019155535 A